# EUROPEAN PATENT SPECIFICATION

(11) **EP 4 438 710 B1**
(45) Date of publication and mention of the grant of the patent: **03.12.2025**
(21) Application number: 24166534.8
(22) Date of filing: 26.03.2024
(51) Int. Cl.: C12H 1/22, C12G 3/07

(54) **USE OF A FOSSIL WOOD CONTAINER FOR MATURATION OF WINES OR SPIRITS**
VERWENDUNG EINES BEHÄLTERS AUS FOSSILEM HOLZ FÜR DIE REIFUNG VON WEINEN ODER SPIRITUOSEN
UTILISATION D'UN RÉCIPIENT EN BOIS FOSSILE POUR LA MATURATION DES VINS OU DES SPIRITUEUX

(30) Priority: 31.03.2023 IT 202300006240
(43) Date of publication of application: 02.10.2024
(73) Proprietor: Tenuta Tarcisio Maule S.r.l. - Società Agricola, 36054 Montebello Vicentino (VI) (IT)
(72) Inventor: MAULE, Mauro, Montebello Vicentino (VI) (IT); MAULE, Massimo, Montebello Vicentino (VI) (IT)
(74) Representative: Contadin, Giorgio

(56) References cited:
- CN-A- 105 950 421
- PORTER ROGER: "Petrified wood Wine Chiller", 1 October 2021 (2021-10-01), XP093087861, Retrieved from the Internet <URL:https://society6.com/product/petrified-wood-32641380537_wine-chiller> [retrieved on 20231002]
- ANONYMOUS: "PW108 Indonesian Petrified Wood Bowl - The Rock Shed", 8 February 2023 (2023-02-08), XP093087866, Retrieved from the Internet <URL:https://web.archive.org/web/20230208005725/https://www.rockshed.com/rock-shop/rocks-gemstones-fossils-and-minerals/fossils/petrified-wood-and-limb-casts/pw108/> [retrieved on 20231002]
- ANONYMOUS: "Two's Company Petrified Wood Hinged Box - Lifestyles Giftware", 25 September 2022 (2022-09-25), XP093087871, Retrieved from the Internet <URL:https://lifestylesgiftware.com/product/twos-company-petrified-wood-hinged-box/> [retrieved on 20231002]
- KOUSSISSI E ET AL: "Influence of toasting of oak chips on red wine maturation from sensory and gas chromatographic headspace analysis", FOOD CHEMISTRY, ELSEVIER LTD, NL, vol. 114, no. 4, 15 June 2009 (2009-06-15), pages 1503 - 1509, XP025953382, ISSN: 0308-8146, [retrieved on 20081108], DOI: 10.1016/J.FOODCHEM.2008.11.003

## Description

The present invention concerns the use of fossil (or aged) wood, preferably oak essence wood, to manufacture hermetically sealed containers (such as vats, drums, casks, barrique barrels, tonneau barrels, and large barrels), for wine, liquor or spirit (such as grappa) maturation (or aging or refinement or aromatization.

It is known that for manufacturing containers or receptacles - such as vats, barrique barrels, tonneau barrels, large barrels, and casks - for wine maturation or aromatization, various materials are used, the main of which has always been represented by oak (or durmast), cherry, chestnut, acacia, and mulberry essence woods (the last three being especially used for secondary wine vessels).

In fact, the wine inside a wooden container takes better and more complex aromatic profiles than that differently stocked, since the wood, on the one hand, allows the micro-oxygenation or aeration thereof (by virtue of its porosity, staves, and bunghole - the central hole, normally closed by a cork cap, having a diameter of 3 to 8 cm, made on a stave of the barrels at the maximum diameter and used to fill and empty the drum, sulphurise it, withdraw samples therefrom -) which facilitates the maturation thereof, enriches the sensory bouquet, and attenuates the effect of tannins, and on the other hand, involves the transfer of its aromas, and precisely, of the tannins to the wine itself.

From an exquisitely technical point of view, reference is thus made to wine maturation, aromatization, aging, or refinement in wood (i.e., the period elapsing from wine fermentation to consumption at the table) and not to conservation or storage, because this step of wine storage in the container does not aim at maintaining the quality features, but at improving them.

The wine refinement time in wooden containers generally varies from 12 months to 48 months, depending on the desired result; for some types of wine, the refinement time in wood is, instead, imposed by the regulations on wine production.

In order to produce the staves, the central part of the wood trunk is selected, referred to as the *"Duramen":* the staves are dried and cured for a period ranging from 1 year to 7 years.

The staves are then curved by steam, hot water, brazier or direct fire processing, for example, and finally subjected to roasting, responsible for the tertiary aromas of the wine and which must be evaluated according to the time employed and the temperature reached.

Wooden containers for wine aging or maturation are typically distinguishable and classifiable in terms of capacity; therefore, the following are available:
- casks - small wine vessels (traditionally made of chestnut or, alternatively, oak) with a capacity generally varying between 25 and 50 litres;
- barriques - small barrels with a capacity varying between 225 litres and 250 litres;
- tonneaux - intermediate barrels, larger than the barriques since they have a capacity varying between 400 litres and 800 litres;
- barrels, in the traditional sense of the term, having a capacity generally varying between 10 hectolitres and 50 hectolitres.

Containers (or tanks) for wine maturation made of alternative materials to wood, such as typically steel and reinforced concrete (with the internal liner possibly vitrified or resinated with epoxy resin) for use in the food field are also known.

The main properties of the reinforced concrete used in wine maturation tanks are:
- insulation, i.e., resistance to heat transfer; in fact, concrete is an excellent thermal insulation and this ensures a constant temperature and prevents thermal changes or shocks which can have negative and degenerative effects on wine;
- moderate porosity; in this respect, the concrete is placed halfway between (more porous) wood and (less porous) steel, ensuring a minimum passage of air and oxygen, which is important for a correct, not premature, slow, and controlled wine maturation;
- protection from external vibrations; the wine stored in concrete tanks is less subject to dangerous vibrations which prevent an ideal evolution of the wine maturation process;
- neutrality; concrete is a neutral material which, unlike wood, does not transfer to the wine those aromatic substances that would modify its bouquet and aromatic heritage.

Therefore, as mentioned above, wines stored in concrete tanks are characterized by:
- maximum expression of aromas and properties of the soil and grape variety of origin. This is the most apparent feature of wines produced or evolving in concrete: while wood gives part of its aromatic substances to the wine, enriching the set of tertiary aromas thereof, concrete maintains those which are typical of the territory and grape variety from which the nectar is obtained;
- freshness, cleanliness, roundness, and authenticity are other obvious features of wines stored in concrete.

This does not mean that concrete is absolutely better than wood or steel, but rather that the choice to vinify using this material reveals the philosophy of the producer, and especially which wine features he/she wants to highlight.

The object of the present invention is placed in an intermediate position between the wooden containers and the concrete containers, since it seeks to combine in a single constructional solution the qualities and advantages resulting therefrom for the quality of refined wine, in particular that of obtaining the wine maturation in a typically wooden container - which, without a doubt, offers that sense of tradition, genuineness, and warmth always appreciated in particular by customers - but in the presence of a minimum if not almost null micro-oxygenation of the wine itself, which concepts are concretely antithetical in the current state of the art.

Prior art examples are the scientific publications findable on the internet and respectively published as:
- Porter Roger: "Petrified Wood Wine Chiller", 1 October 2021, XP093087861;
- Anonymous: "PW10B Indonesian Petrified Wood Bowl - The Rock Shed", 8 February 2023, XP093087866;
- Anonymous: "Two's Company Petrified Wood", 25 September 2022, XP093087871.

In particular, main purpose of the invention is thus to identify an innovative technology which includes using an alternative natural material the technical key features of which allow it to be used to manufacture a container for the maturation mainly of wine and secondarily of a liquor as well.

In other words, prevailing purpose of the invention is to provide an alternative natural material which is an apparent technical progress with respect to the current state of the art, leading to obtain a wine or liquor with innovative qualitative features, not found in the current state of the art.

It is another purpose of the invention to devise a natural material to be used to manufacture a container for wine, liquor, or spirit maturation, which, despite being made of wood, has a minimal if any effect on the aroma of the wine, liquor or spirit which remains substantially unchanged with respect to that deriving from the grape variety and soil from which it is obtained.

It is a last but not least purpose of the invention to create a natural woody material to manufacture a container for wine or liquor maturation which is environmentally friendly and obtainable at competitive costs.

Said purposes are achieved by using a container (such as a vat, a drum, a cask, a barrique barrel, a tonneau barrel, a large barrel, and so on) made of fossil wood for wine or liquor maturation according to the appended claim 1, to which reference is made for the sake of brevity.

Further detailed operating features of the aforesaid use of the present invention are indicated in the related dependent claims.

Also a container for wine or liquor maturation, being per se object of the invention, according to the appended claim 8, as hereinafter referred for the sake of simplicity, contributes to the achievement of the aforesaid purposes.

The aforesaid claims, specifically and concretely defined below, are intended as an integral part of the present description.

Advantageously, the invention allows to produce a wine, liquor or spirit which retains its typical and traditional aroma of origin (determined by the grape variety and soil), even if refined or aged in wooden containers which, as such, as it occurs in the current state of the art, should affect the aromatic properties thereof.

This is because the invention provides for the use of a fossil wood (or aged or certified as ancient through a carbon 14 analysis carried out, for example, in a university laboratory and therefore inert) to manufacture containers - typically but not exclusively barrels of various capacities - for wine or liquor maturation.

The container for wine or liquor maturation of the instant invention produces an unexpected technical effect in the field in hand, and as known, this is to be considered as an indication of the presence not only of novelty but also of inventive step in the subject being exclusively claimed: such a surprising technical effect precisely results from the subject as claimed and is based on the main, essential, indispensable technical features of the invention, combined with the known features.

In the invention, such a technical effect is not properly based on technical features which are, in combination, already included in the prior art, since the use of fossil wood, aged or certified as ancient, is currently unknown and has never been adopted to date in the field involved (production of wines or liquors).

The natural material used in the invention is advantageously recoverable in river sites, with minimal if not zero environmental impact, thus being environmentally sustainable, and has extraordinary properties of workability, hardness, and durability over time once processed.

It results that the production costs of the containers for wine or liquor maturation are quite low, as the material used is recovered in nature where it had been abandoned, lost, or unused for thousands of years.

Said purposes and advantages will be more apparent from the description that follows, related to a preferred operating variant of the use of a container made of fossil wood for wine or liquor maturation, object of the invention, given by way of non-limiting, exemplary indication.

Therefore, the invention focuses on the use of a container made of fossil wood for wine or liquor maturation, refinement, aromatization, or aging.

In particular, the fossil wood is recovered from the internal fraction of the bed of river sites, where it previously was submerged, and is chemically inert, due to the action over time of silt and/or the layer of sediments, sand, and gravel covering such a fossil wood when submerged.

Preferentially but not necessarily, the fossil wood of the invention is crystallized.

Moreover, fossil wood presents a life of at least 1,000 years, calculated using the carbon 14 (or ¹⁴C or radiocarbon) method, and is therefore certified as ancient wood.

It has been certified by an analysis laboratory that a sample of a piece of fossil wood used for the purposes of the present invention provides a conventional radiocarbon age (or even ¹⁴C age), absolute age expressed in BP years, acronym for *"Before present*" (where the reference year is 1950), of 1650 ± 50 years.

In a preferred but not constraining manner, the fossil wood with which the container of the invention is made is essentially oak, coming for example from river sites of the forests of Slavonia (eastern region of Croatia), and from neighbouring regions of Bosnia and Serbia.

Even more preferably but not limitedly, such an oak essence comes in any of the colours selected from the group consisting of white, grey, dark brown, black, and/or combinations thereof.

The fossil wood referred to in the use of the invention has substantially zero porosity and is substantially oxygen-free, thus allowing the wine or liquor contained in the container made with such a fossil wood to acquire an original, innovative, unknown aroma, since it is substantially independent of oxygen which, on the other hand, typically affects the wine, liquor, or spirit aging or maturation in traditional type barrels.

As already highlighted, the invention also relates to a container for wine or spirit maturation, refinement, aromatization, or aging, comprising a plurality of shaped and curved staves made of fossil wood, as described in detail above.

In particular, the aforesaid shaped staves present a thickness in the range of 15-35 mm.

The fossil wood intended for the use of the invention is no longer definable as a wood in the traditional sense of the term, but neither as a fossil stone: rather, it is a highly hard, robust inert material, processable by expert hands, durable, and environmentally sustainable.

Based on the description just provided, it is thus understood that the use of a container made of fossil wood (generally of oak essence) to manufacture a container (or receptacle) for wine or liquor maturation (aging, aromatization, or refinement) of the present invention achieves the purposes and reaches the advantages mentioned above.

Finally, it is apparent that several other variations may be made to the use of fossil wood in hand, falling within the limited scope of the appended claims, and it is apparent that any materials, shapes and sizes of the details described may be used as needed in the practical implementation of the invention, and may be replaced by other technically equivalent elements.

## Claims

1. Use of a container made of fossil wood for wines or liquors maturation.

2. Use according to claim 1), **characterized in that** said fossil wood is recovered from the internal fraction of the bed of river sites, where it previously lay submerged, and is chemically inert, due to the action over time of the silt and/or of the layer of sediments, sand and gravel which covered said fossil wood when submerged.

3. Use according to claim 1) or 2), **characterized in that** said fossil wood is crystallized.

4. Use according to any of the preceding claims, **characterized in that** said fossil wood has a life of at least 1,000 years, calculated using the carbon 14 (or ¹⁴C or radiocarbon) method, and is certified as ancient.

5. Use according to any of the preceding claims, **characterized in that** said fossil wood is in oak essence.

6. Use according to claim 5), **characterized in that** said oak essence presents in any of the colours selected from the group consisting of white, grey, dark brown, black and/or a combination thereof.

7. Use according to any of the preceding claims, **characterized in that** said fossil wood has substantially zero porosity and is substantially oxygen-free.

8. Container for wines or liquors maturation comprising a plurality of shaped staves made of fossil wood.

9. Container according to claim 8), **characterized in that** said shaped staves have a thickness in the range of 15-35 mm.

## Patentansprüche

1. Verwendung eines Behälters aus fossilem Holz für die Reifung von Weinen oder Spirituosen.

2. Verwendung nach Anspruch 1, **dadurch gekennzeichnet, dass** das fossile Holz aus dem inneren Teil des Betts von Flüssen geborgen wurde, wo es verschüttet war und im Lauf der Zeit durch die Einwirkung von Schlamm und/oder Sedimentschichten, Sand und Kies, die das fossile Holz bedeckten, chemisch inert wurde.

3. Verwendung nach Anspruch 1 oder 2, **dadurch gekennzeichnet, dass** das fossile Holz kristallisiert ist.

4. Verwendung nach einem der vorstehenden Ansprüche, **dadurch gekennzeichnet, dass** das fossile Holz ein Alter von wenigstens 1.000 Jahren hat, berechnet nach dem Kohlenstoff-14-(oder ¹⁴C- oder Radiokarbon-) Verfahren, und als antik zertifiziert ist.

5. Verwendung nach einem der vorstehenden Ansprüche, **dadurch gekennzeichnet, dass** das fossile Holz Eichenessenz ist.

6. Verwendung nach Anspruch 5, **dadurch gekennzeichnet, dass** die Eichenessenz in einer der Farben in Erscheinung tritt, die aus einer Gruppe ausgewählt sind, die weiß, grau, dunkelbraun, schwarz und/oder eine Kombination davon, enthält.

7. Verwendung nach einem der vorstehenden Ansprüche, **dadurch gekennzeichnet, dass** das fossile Holz im Wesentlichen keine Porosität hat und im Wesentlichen sauerstofffrei ist.

8. Behälter zur Reifung von Weinen oder Spirituosen, der mehrere geformte Stäbe aus fossilem Holz aufweist.

9. Behälter nach Anspruch, **dadurch gekennzeichnet, dass** die geformten Stäbe eine Dicke im Bereich von 15 bis 35 mm haben.

## Revendications

1. - Utilisation d'un récipient en bois fossile pour la maturation de vins ou de spiritueux.

2. - Utilisation selon la revendication 1), **caractérisée par le fait que** ledit bois fossile est récupéré à partir de la fraction interne du lit de sites fluviaux où il était auparavant immergé, et qu'il est chimiquement inerte, en raison de l'action au cours du temps du limon et/ou de la couche de sédiments, de sable et de gravier qui recouvrait ledit bois fossile lorsqu'il était immergé.

3. - Utilisation selon la revendication 1 ou 2, **caractérisée par le fait que** ledit bois fossile est cristallisé.

4. - Utilisation selon l'une quelconque des revendications précédentes, **caractérisée par le fait que** ledit bois fossile a une vie d'au moins 1000 ans, calculée par la méthode du carbone 14 (ou ¹⁴C ou radiocarbone), et est certifié comme ancien.

5. - Utilisation selon l'une quelconque des revendications précédentes, **caractérisée par le fait que** ledit bois fossile est en essence de chêne.

6. - Utilisation selon la revendication 5), **caractérisée par le fait que** ladite essence de chêne se présente dans l'une quelconque des couleurs choisies dans le groupe constitué par le blanc, le gris, le brun foncé, le noir et/ou une combinaison de ces couleurs.

7. - Utilisation selon l'une quelconque des revendications précédentes, **caractérisée par le fait que** ledit bois fossile a une porosité sensiblement nulle et est sensiblement exempt d'oxygène.

8. - Récipient pour la maturation de vins ou de spiritueux comprenant une pluralité de douelles façonnées en bois fossile.

9. - Récipient selon la revendication 8), **caractérisé par le fait que** lesdites douelles façonnées ont une épaisseur se situant dans la plage de 15 à 35 mm.
